# EUROPÄISCHE PATENTANMELDUNG

(11) **EP 4 098 101 A1**
(43) Veröffentlichungstag der Anmeldung: **07.12.2022**
(21) Anmeldenummer: 22174225.7
(22) Anmeldetag: 19.05.2022
(51) Int. Cl.: A01D 45/02, A01D 34/835, A01D 34/83, A01B 73/04

(54) **ERNTEVORSATZ FÜR IN REIHEN ANGEBAUTE MAISPFLANZEN**

(30) Priorität: 02.06.2021 DE 202021103020 U
(71) Anmelder: Rainer, Stephan, 94447 Plattling (DE)
(72) Erfinder: Rainer, Stephan, 94447 Plattling (DE)
(74) Vertreter: Benninger, Johannes

(57) **Zusammenfassung**

Die Erfindung betrifft einen Erntevorsatz (10) für in Reihen angebaute Maispflanzen (7). Der Erntevorsatz (10) dient insbesondere zum Anbau an einer selbstfahrenden Erntemaschine, insbesondere an einem Mähdrescher oder Häcksler.

Der Erntevorsatz (10) weist mindestens eine Einzugs- und Fördereinrichtung zur Erfassung der in Reihen angeordneten Maispflanzen (7) auf, wobei dem Erntevorsatz (10) eine Mehrzahl von nebeneinander angeordneten Schneideinrichtungen zum Abschneiden von mehreren in Reihen nebeneinander angeordneten Maispflanzen (7) zugeordnet ist. Weiterhin umfasst der Erntevorsatz (10) Einrichtungen zum Pflücken, Aufnehmen und/oder Bearbeiten der Maiskolben.

Jeder der Schneideinrichtung (16) ist eine in einer Fahrtrichtung (FR) fluchtend nachfolgende mechanische Einrichtung (20) zur Kürzung, zur Entfernung und/oder zum Abschlagen von auf dem Feld verbliebenen Pflanzenstoppeln und/oder von auf dem Feld abgelegten Maispflanzen (7) zugeordnet.

## Beschreibung

Die vorliegende Erfindung betrifft Erntevorsatz für in Reihen angebaute Maispflanzen, insbesondere für eine landwirtschaftliche Erntemaschine. Die Erfindung betrifft zudem eine landwirtschaftliche Erntemaschine mit mindestens einem daran angebauten Erntevorsatz für in Reihen angebaute Maispflanzen. Insbesondere betrifft die vorliegende Erfindung eine Erntevorrichtung zum Ernten von Mais mit einem an einer selbstfahrenden Erntemaschine, insbesondere einem Mähdrescher oder Häcksler, angeordneten Erntevorsatz.

Der Anbau von Mais erfolgt generell in Reihenkultur. Das jeweils angewandte Ernteverfahren ist davon abhängig, ob der Mais als Futtermais und/oder Biomasse oder als Körnermais geerntet werden soll. Die Ernte als Futtermais und/oder Biomasse erfolgt häufig mittels eines zumeist als selbstfahrende Erntemaschine betriebenen Feldhäckslers, während die Ernte als Körnermais in der Regel mittels eines Mähdreschers mit entsprechendem Erntevorsatz durchgeführt wird.

Mit dem Feldhäcksler wird die gesamte Maispflanze einschließlich der im Kolben enthaltenen Maiskörner zerkleinert, um diese anschließend in Form von Silomais als Futtermittel zu verwenden, insbesondere zur Winterfütterung von Wiederkäuern. In dieser zerkleinerten Form kann die Maispflanze auch als Biomasse verwertet und beispielsweise Biogasanlagen zugeführt werden, um daraus energetisch verwertbares Brenngas zu erzeugen.

Bei der Körnermaisernte werden die Maiskolben zunächst mittels geeigneter Erntevorsätze maschinell von den Maispflanzen gepflückt. Die Maispflanzen verbleiben anschließend auf dem Feld. Dabei kann im zeitlichen Zusammenhang mit dem Pflücken der Maiskolben ein Abschneiden der Maispflanzen vorgesehen sein.

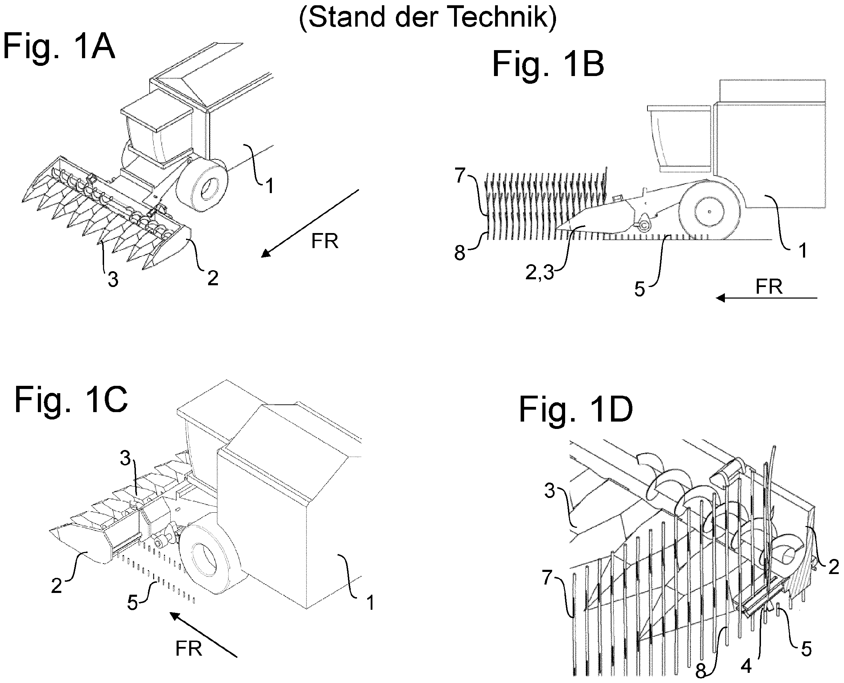

Die schematischen Darstellungen der Figuren 1A bis 1D zeigen den Stand der Technik eines an einem Mähdrescher 1 angeordneten Maispflückvorsatzes 2, wie er insbesondere bei der Ernte von Körnermais zum Einsatz kommen kann. Der Maispflückvorsatz 2 umfasst Führungseinrichtungen 3 für die Stängel 8 der Maispflanzen 7. Zwischen jeweils benachbarten Führungseinrichtungen 3 sind jeweils Schneideinrichtungen 4 angeordnet (vgl. Fig. 1D), welche die Maispflanzen 7 oberhalb des Bodens abschneiden. Anschließend werden durch den Maispflückvorsatz 2 die Kolben vom Stängel 8 der Maispflanzen 7 abgebrochen. Die Maiskolben werden dem Mähdrescher 1 zugeführt und die abgeernteten Stängel 8 der Maispflanzen 7 werden zum Boden hinausgeworfen.

Dabei bleiben mehr oder weniger lange Reststoppel 5 am Boden stehen. Die Länge der Reststoppeln 5 wird dabei durch die Arbeitshöhe, in welcher der Maispflückvorsatz 2 am Mähdrescher 1 angeordnet ist, bestimmt. In der Regel beträgt die Arbeitshöhe circa 20cm bis 30cm.

In diesen Reststoppeln 5 können sich Schadinsekten einnisten und kommende Kälteperioden überleben. So kann sich in den Reststoppeln 5 insbesondere der Maiszünsler über den Winter bis in die nächste Vegetationsperiode halten, wo er dann großen Schaden anrichten kann. Bei dem Maiszünsler handelt es sich um einen Falter, der zu erheblichen Schäden in Maisanbaugebieten führen kann, wenn die Maden des Maiszünslers in das Innere des Schafts der Maispflanze eindringen und sich durch diesen hindurch in Richtung der Wurzel der Maispflanze fressen. Die derart befallenen Maispflanzen sind zudem anfällig für Pilzbefall. Problematisch ist in diesem Zusammenhang, dass die Schädlinge im verpuppten Stadium in den unteren Teilen der Maisstängel, insbesondere den Reststoppeln, überwintern können. Deshalb ist es von großer Bedeutung, das Überwintern der Maiszünslerlarven und somit die Vermehrung dieses Schädlings zu verhindern.

Aus diesem Grund werden die Reststoppel der Maispflanzen nach der Ernte in der Regel mit einem weiteren Arbeitsgang mit Hilfe eines Mulchvorganges unter Verwendung eines sog. Mulchers mechanisch zerstört. Die Bearbeitung des Feldes in einem zweiten Arbeitsgang ist zeitintensiv und verursacht somit deutliche Zusatzkosten. Zudem besteht die Problematik, dass ein Teil der Reststoppeln und der gegebenenfalls auf dem Feld abgelegten Maispflanzen von den Antriebsrädern und den lenkbaren Rädern der Erntemaschine überfahren werden und folglich beim anschließenden Mulchen nicht mehr ordentlich erfasst werden können.

Dies impliziert wiederum eine erhöhte Gefahr von dort verbleibenden Schadinsekten, insbesondere Maiszünslern, die in diesen nicht vom Mulchvorgang erfassten Pflanzenresten überleben und überwintern können.

Die Aufgabe der Erfindung besteht darin, eine Vorrichtung zu entwickeln, welche eine annähernd vollständige Zerkleinerung von Reststoppeln der Maispflanzen im zeitlichen Zusammenhang mit dem Abernten der Maispflanzen in einfacher und effektiver Weise ermöglicht.

Die obige Aufgabe wird durch einen Erntevorsatz für die Maisernte gelöst, der die Merkmale des unabhängigen Anspruchs umfasst. Weitere vorteilhafte Ausgestaltungen werden durch die abhängigen Ansprüche beschrieben.

Unter dem hier verwendeten Begriff des Erntevorsatzes ist ein Arbeitsgerät zu verstehen, welches in einer Fahrtrichtung vor einer Antriebsmaschine, beispielsweise vor einem Mähdrescher oder einem Häcksler, angeordnet wird. Wenn nachfolgend von Mähdrescher gesprochen wird, so ist damit alternativ auch ein Häcksler gemeint. Mit einem solchen Erntevorsatz werden Bereiche der Felder somit entsprechend bearbeitet, bevor die Räder der Antriebsmaschine diese Bereiche befahren, was zu einer Beschädigung des Ernteguts führen würde. Insbesondere wird der hier beschriebene Erntevorsatz anstelle eines normalen Mähvorsatzes am Mähdrescher angeordnet.

Insbesondere handelt es sich hierbei um einen Erntevorsatz zur Körnerernte, bei der die Maiskolben geerntet werden, die restliche Pflanze jedoch nicht verwertet wird.

Ein entsprechender Erntevorsatz zum Bearbeiten von in Reihen angebaute Maispflanzen weist mindestens eine Einzugs- und Fördereinrichtung auf, die die in Reihen angeordneten Maispflanzen erfasst. Insbesondere können der mindestens einen Einzugs- und Fördereinrichtung Führungseinrichtungen zugeordnet sein, die nebeneinander beabstandet angeordnet sind und insbesondere definierte Abstände aufweisen, die mit den Abständen der in Reihen angepflanzten Maispflanzen korrespondieren. In der Regel weisen die Reihen einen Abstand von 70cm oder 75 cm auf. Dementsprechend sind entsprechend beabstandete Führungseinrichtungen am Erntevorsatz vorgesehen, um die Maispflanzen der mindestens einen Einzugs- und Fördereinrichtung zuzuführen.

Als Einzugs- und Fördereinrichtung kann beispielsweise eine Förderschnecke vorgesehen sein, welche Förderschnecke sich um eine Drehachse bewegt, welche Drehachse im Wesentlichen orthogonal zur Fahrtrichtung angeordnet ist.

Weiterhin ist vorgesehen, dass der Erntevorsatz eine Mehrzahl von nebeneinander angeordneten Schneideinrichtungen zum Abschneiden von mehreren in Reihen nebeneinander angeordneten Maispflanzen aufweist. Insbesondere ist jeder Führungseinrichtungen eine Schneideinrichtung zum Abschneiden der gesamten Maispflanze zugeordnet, welche nachfolgend auch als erste Schneideinrichtung bezeichnet wird.

Insbesondere handelt es sich bei der ersten Schneideinrichtung um einen sogenannten Horizontalhäcksler mit einem in einer Horizontalebene rotierenden Messer.

Weiterhin umfasst der Erntevorsatz Einrichtungen zum Pflücken, Aufnehmen und/oder Bearbeiten der Maiskolben, beispielsweise eine Pflückeinrichtung zum Abernten der Maiskolben von den vermittels der ersten Schneideinrichtung abgeschnittenen Maispflanzen oder zum Abernten der Maiskolben bevor die Maispflanze durch die erste Schneideinrichtung abgeschnitten wird.

Weiterhin ist beispielsweise vorgesehen, dass der Erntevorsatz einen Auffangbehälter o.ä. für die Maiskolben aufweist oder dass dem Erntevorsatz eine Transporteinrichtung zugeordnet ist, um die geernteten Maiskolben einem am Mähdrescher angeordneten oder dem Mähdrescher zugeordneten Auffangbehälter zuzuführen.

Die abgeschnittenen Maispflanzen werden nach dem Entfernen der Maiskolben vorzugsweise wieder auf dem Feld abgelegt und insbesondere nicht weiter verwertet.

Es ist vorgesehen, dass jeder ersten Schneideinrichtung eine in einer Fahrtrichtung fluchtend nachfolgende mechanische Einrichtung zur Kürzung, zur Entfernung und/oder zum Abschlagen von auf dem Feld verbliebenen Pflanzenstoppeln sowie der auf dem Feld abgelegten abgeschnittenen Maispflanzen zugeordnet ist.

Die mechanischen Einrichtungen sind insbesondere zum Zerschneiden und/oder Zerkleinern der Reststoppeln und der auf dem Feld abgelegten abgeschnittenen Maispflanzen ausgebildet. Hierbei werden die Reststoppeln vorzugsweise unmittelbar am Boden abgetrennt und gemeinsam mit den abgeschnittenen Maispflanzen in sehr feine Bestandteile zerkleinert.

Die zerkleinerten Reste der Maispflanze können in einem nachfolgenden Umpflügvorgang vollständig und möglichst tief in den Boden eingebracht werden, wo sie nachfolgend verrotten. Insbesondere werden hierbei die gegebenenfalls in den Reststoppeln vorhandenen Puppen des Maiszünslers zerstört.

Die mechanischen Einrichtungen sind vorzugsweise drehbar angelenkt am Erntevorsatz angeordnet, Insbesondere ist jede der mechanischen Einrichtungen jeweils einzeln am Erntevorsatz drehbar angelenkt.

Weiterhin kann gemäß einer Ausführungsform vorgesehen, dass die mechanischen Einrichtungen am Boden geführt sind, insbesondere ist der mechanischen Einrichtungen jeweils einzeln am Boden geführt ausgebildet.

Besonders bevorzugt sind die die mechanischen Einrichtungen jeweils ein einzeln tiefengeführt ausgebildet. Insbesondere ist jeder der mechanischen Einrichtungen jeweils ein Rad zu Tiefenführung zugeordnet.

Das Tiefenführungsrad hat zudem den Vorteil, dass das zusätzliche Gewicht der mechanischen Einheit auf dem Rad abgestützt wird. Dies verhindert, dass sich die erhöhte Frontlast des Erntevorsatzes negativ auf die Antriebsmaschine auswirkt. Gemäß einer weiteren Ausführungsform kann vorgesehen sein, dass das Tiefenführungsrad zumindest teilweise auch ein Gewicht des gesamten Erntevorsatzes aufnehmen kann.

Die mechanischen Einheiten können beispielsweise ein Schlegelmesser und/oder ein Häckselmesser und oder eine andere geeignete Schneid- und/oder Zerkleinerungseinrichtung aufweisen. Beispielsweise handelt es sich um mindestens ein um eine Drehachse gelagertes Schlegelmesser. Besonders bevorzugt ist die Verwendung mindestens eines um eine weitgehend horizontale Drehachse gelagertes Schlegelmesser je mechanischer Einheit, wobei sich das Schneidmesser in einer vertikal angeordneten Schneidebene um die Drehachse dreht.

Die mechanischen Einheiten können jedoch auch beispielsweise mehrere entsprechende Schlegelmesser und/oder Häckselmesser o.ä. aufweisen, um eine optimierte Zerkleinerung der Reststoppeln zu erzielen. Beispielsweise kann die Kombination eines um eine weitgehend horizontale Drehachse gelagerten Schlegelmessers und eines um eine weitgehend vertikale Drehachse gelagerten Schlegelmessers vorgesehen sein.

Aufgrund der individuellen Tiefenführung jeder einzelnen mechanischen Einheit, insbesondere in Kombination mit der individuellen drehbaren Anlenkung jeder einzelnen mechanischen Einheit, kann die Schneideinrichtung und/oder Zerkleinerungseinrichtung der jeweiligen mechanischen Einheit immer in optimaler Anordnung exakt über den Boden geführt werden, um die Reststoppel möglichst vollständig zu zerkleinern.

Eine weitere Ausführungsform sieht insbesondere zwei Tiefenführungsräder je mechanischer Einheit vor, zwischen denen jeweils die mindestens eine Schneid- und/oder Zerkleinerungseinrichtung der mechanischen Einheit angeordnet ist.

Weiterhin kann vorgesehen sein, dass eine Breite des Erntevorsatzes für den Straßentransport, beispielsweise für den Transport von einem ersten Feld zu einem zweiten Feld, reduziert werden kann. Beispielsweise weist der Erntevorsatz in einer Arbeitsanordnung eine Arbeitsbreite auf, die eine Vielzahl von Reihen an Maispflanzen abdeckt. Vorzugsweise ist vorgesehen, dass der Erntevorsatz zum parallelen Abarbeiten von sechs bis zehn Reihen ausgebildet ist.

Für den Transport auf der Straße können seitliche Bereiche des Erntevorsatzes hochgeklappt werden. Insbesondere werden die hochgeklappten Bereiche vorzugsweise oberhalb eines mittleren Bereichs des Erntevorsatzes angeordnet. Gemäß einer Ausführungsform ist vorgesehen, dass dadurch die Breite des Erntevorsatzes um circa 50% reduziert werden kann. Zusammen mit einem Teil der Führungseinrichtungen werden dabei die jeweils den nach oben geklappten zweiten Führungseinrichtungen fluchtend nachgeordneten mechanischen Einheiten ebenfalls mit nach oben geklappt

Für den Transport auf der Straße kann der gesamte Erntevorsatz zudem angehoben werden. Hierbei kann gemäß einer Ausführungsform vorgesehen sein, dass die Tiefenführungsräder der mittleren mechanischen Einheiten, welche in der Transportanordnung nicht nach oben geklappt angeordnet sind, auch nach dem Anheben des Erntevorsatzes für den Straßentransport weiterhin Bodenkontakt haben und somit das Gewicht des Erntevorsatzes auch im angehobenen Zustand entsprechend abstützen.

Gemäß einer Ausführungsform ist vorgesehen, dass die mechanischen Einrichtungen jeweils über einen Hydraulikmotor oder einen Elektromotor oder ein anderes geeigneten Antriebsmittel angetrieben werden. Vorzugsweise ist hierbei jeder mechanischen Einrichtung ein eigenes Antriebsmittel zugeordnet. Es können jedoch auch für gewisse Anwendungsfälle Ausführungsformen vorteilhaft sein, wobei den mechanischen Einrichtungen jeweils ein gemeinsamer Antrieb, insbesondere jeweils ein gemeinsamer Hydraulikmotor oder einen Elektromotor, zugeordnet ist. Weiterhin sind Ausführungsformen denken, bei denen jeweils ein Teil der mechanischen Einrichtungen einem gemeinsamen Antrieb zugeordnet sind, so dass die Anzahl der Antriebe geringer ist als die Anzahl der mechanischen Einrichtungen.

Zur Lösung der oben genannten Aufgabe schlägt die Erfindung neben dem in verschiedenen Ausführungsvarianten beschriebenen Erntevorsatz für die Maisernte weiterhin eine selbstfahrende landwirtschaftliche Erntemaschine vor, die mit mindestens einem solchen Erntevorsatz gemäß einer der zuvor beschriebenen Ausführungsvarianten ist. Diese selbstfahrende landwirtschaftliche Erntemaschine kann bspw. durch einen Mähdrescher oder durch einen Häcksler gebildet sein.

Somit wird eine landwirtschaftliche Erntemaschine zur Verfügung gestellt, die mit mindestens einem Arbeitsgerät in Gestalt eines Erntevorsatzes ausgestattet ist, wobei dieses Arbeitsgerät oder dieser Erntevorsatz in einer Fahrtrichtung vor der Antriebsmaschine, d.h. vor der landwirtschaftlichen Erntemaschine - gebildet beispielsweise durch einen Mähdrescher oder einen Häcksler - angeordnet ist oder wird.

Wenn im Zusammenhang der vorliegenden Beschreibung oftmals von Mähdreschern gesprochen wird, so sind damit alternativ auch Häcksler gemeint. Mit einem solchen Erntevorsatz werden Bereiche der Felder somit entsprechend bearbeitet, bevor die Räder der Antriebsmaschine diese Bereiche befahren, was zu einer Beschädigung des Ernteguts führen würde. Insbesondere wird der hier beschriebene Erntevorsatz anstelle eines normalen Mähvorsatzes am Mähdrescher angeordnet.

Rein vorsorglich sei an dieser Stelle betont, dass alle Aspekte und Ausführungsvarianten, die zuvor im Zusammenhang mit dem erfindungsgemäßen Erntevorsatz erläutert wurden, gleichermaßen als Teilaspekte der erfindungsgemäßen landwirtschaftlichen Erntemaschine betrachtet werden können oder dass sie Teilaspekte dieser Erntemaschine betreffen oder bilden können. Wenn daher an einer Stelle bei der Beschreibung oder auch bei den Anspruchsdefinitionen zum erfindungsgemäßen Erntevorsatz von bestimmten Aspekten und/oder Zusammenhängen und/oder Wirkungen die Rede ist, so gilt dies gleichermaßen für die erfindungsgemäße landwirtschaftliche Erntemaschine.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.
Figuren 1A bis 1D zeigen den Stand der Technik eines an einem Mähdrescher angeordneten Maispflückvorsatzes für die Ernte von Körnermais.
Fig. 2 zeigt eine Ausführungsvariante eines erfindungsgemäßen Erntevorsatzes, der Teil einer landwirtschaftlichen Erntemaschine sein kann.
Figuren 3 bis 8 zeigen einen an einem Mähdrescher angeordneten erfindungsgemäßen Erntevorsatz 10 in unterschiedlichen Ansichten.

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die erfindungsgemäße Vorrichtung ausgestaltet sein kann und stellen keine abschließende Begrenzung dar.

Die Ausführungsformen, Beispiele und Varianten der vorhergehenden Absätze, die Ansprüche oder die folgende Beschreibung und die Figuren, einschließlich ihrer verschiedenen Ansichten oder jeweiligen individuellen Merkmale, können unabhängig voneinander oder in beliebiger Kombination verwendet werden. Merkmale, die in Verbindung mit einer Ausführungsform beschrieben werden, sind für alle Ausführungsformen anwendbar, sofern die Merkmale nicht unvereinbar sind.

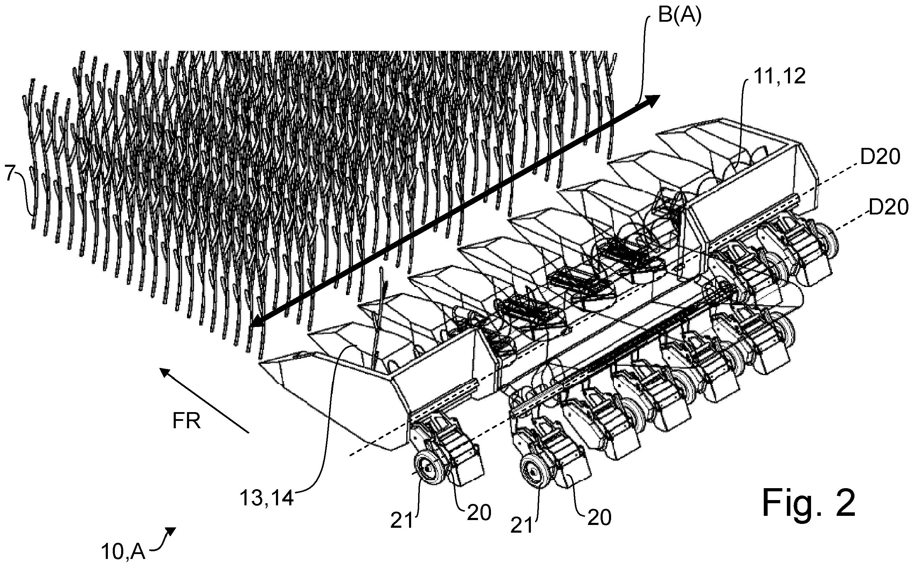

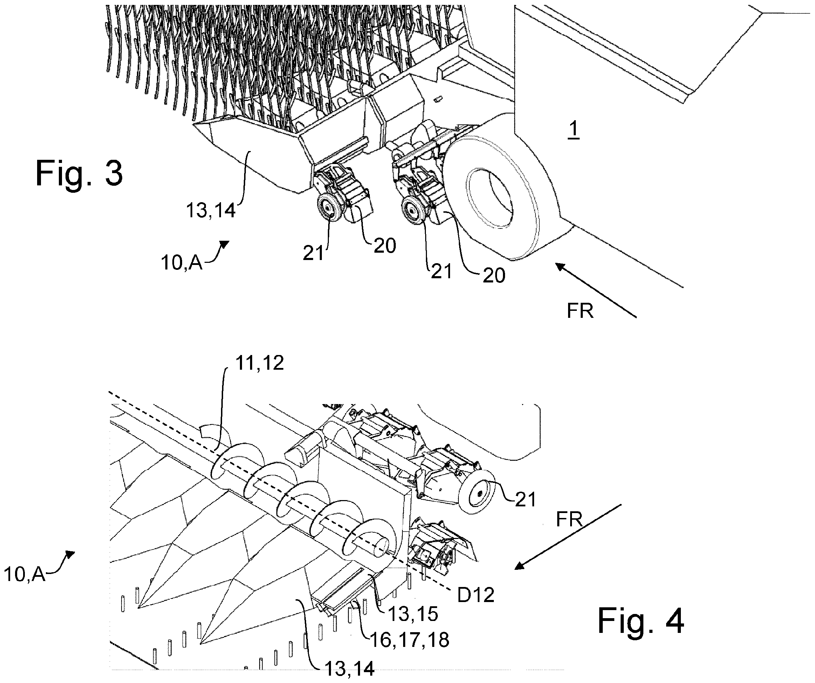

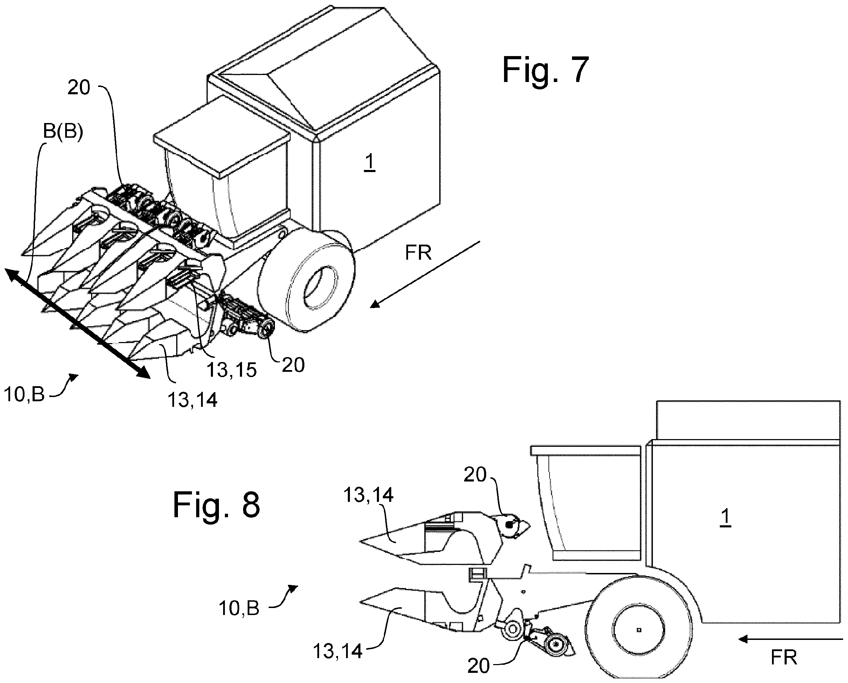

Die schematische und perspektivische Ansicht der Fig. 2 zeigt eine Ausführungsvariante eines erfindungsgemäßen Erntevorsatzes 10. Die Figuren 3 bis 8 zeigen einen an einem Mähdrescher 1 angeordneten erfindungsgemäßen Erntevorsatz 10 in unterschiedlichen Ansichten. Dabei zeigen die Figuren 2 bis 6 den Erntevorsatz 10 in einer Arbeitsanordnung A, während die Figuren 7 und 8 den Erntevorsatz 10 in einer Transportanordnung B zeigen.

Der Erntevorsatz 10 weist in der Arbeitsanordnung A eine erste Arbeitsbreite B(A) die eine Vielzahl von Reihen an Maispflanzen 7 abdeckt. Insbesondere ist vorgesehen, dass der Erntevorsatz 10 zum parallelen Abarbeiten von vier oder mehr Reihen ausgebildet ist. Im dargestellten Ausführungsbeispiel ist der Erntevorsatz 10 für das gleichzeitige Bearbeiten von acht Parallelreihen an Maispflanzen 7 ausgebildet.

Der Erntevorsatz 10 wird in einer Fahrtrichtung FR vor dem Mähdrescher 1 angeordnet, welcher Mähdrescher 1 als Antriebsmaschine dient. Insbesondere handelt es sich hierbei um einen Erntevorsatz 10 zur Körnerernte, bei der die Maiskolben von in Reihen angebauten Maispflanzen 7 geerntet werden, die restliche Maispflanze 7 jedoch nicht verwertet wird.

Der Erntevorsatz 10 weist mindestens eine Einzugs- und Fördereinrichtung 11 auf, die die in Reihen angeordneten Maispflanzen 7 erfassen und handhaben kann. Als Einzugs- und Fördereinrichtung 11 ist im dargestellten Ausführungsbeispiel eine Förderschnecke 12 (siehe Fig. 4) vorgesehen. Diese erstreckt sich im Wesentlichen über eine gesamte Breite des Erntevorsatzes 10 quer zur Fahrtrichtung FR und dreht sich um eine Drehachse D12, welche Drehachse D12 im Wesentlichen orthogonal zur Fahrtrichtung FR angeordnet ist.

Der mindestens einen Einzugs- und Fördereinrichtung 11 sind Führungseinrichtungen 13 zugeordnet, die nebeneinander beabstandet angeordnet sind und insbesondere definierte Abstände aufweisen, die mit den Abständen der in Reihen angepflanzten Maispflanzen 7 korrespondieren. Insbesondere sind erste Führungseinrichtungen 14 für die gesamte Maispflanze 7 und zweite Führungseinrichtungen 15 für den Maisstängel 8 in einem unteren blattfreien Bereich vorgesehen. Bevorzugt ist jeweils eine zweite Führungseinrichtung 15 mittig zwischen zwei ersten Führungseinrichtungen 14 angeordnet.

In der Regel weisen die Reihen einen Abstand von 70 cm oder 75 cm auf. Die Abstände zwischen den Führungseinrichtungen 13, insbesondere zwischen den zweiten Führungseinrichtungen 15, sind korrespondieren hierzu ausgebildet, um die Maispflanzen 7 zu erfassen und der mindestens einen Einzugs- und Fördereinrichtung 11 zuzuführen.

Weiterhin ist vorgesehen, dass der Erntevorsatz 10 eine Mehrzahl von nebeneinander angeordneten Schneideinrichtungen 16 zum Abschneiden von mehreren in Reihen nebeneinander angeordneten Maispflanzen 7 aufweist. Insbesondere ist jeder zweiten Führungseinrichtung 15 eine Schneideinrichtung 16 zum Abschneiden der jeweiligen Maispflanze 7 zugeordnet. Insbesondere handelt es sich bei der Schneideinrichtung 16 um einen sogenannten Horizontalhäcksler 17 mit einem in einer Horizontalebene unterhalb der zweiten Führungseinrichtung 15 rotierenden Messer Schneidmesser 18 (siehe Fig. 4).

Weiterhin umfasst der Erntevorsatz 10 Einrichtungen zum Pflücken, Aufnehmen und/oder Bearbeiten der Maiskolben (nicht sichtbar), beispielsweise eine Pflückeinrichtung zum Abernten der Maiskolben von den vermittels der Schneideinrichtung 16 abgeschnittenen Maispflanzen 7 oder zum Abernten der Maiskolben bevor die Maispflanze 7 durch die Schneideinrichtung 16 abgeschnitten wird.

Die abgeernteten und abgeschnittenen Maispflanzen 7 werden nach dem Entfernen der Maiskolben vorzugsweise wieder auf dem Feld abgelegt und insbesondere nicht weiter verwertet.

Es ist vorgesehen, dass jeder Schneideinrichtung 16 eine in der Fahrtrichtung FR fluchtend nachfolgende mechanische Einrichtung 20 zur Kürzung, zur Entfernung und/oder zum Abschlagen von auf dem Feld verbliebenen Pflanzenstoppeln 5 sowie der auf dem Feld abgelegten abgeschnittenen Maispflanzen 7 zugeordnet ist.

Die mechanischen Einrichtungen 20 sind insbesondere zum Zerschneiden und/oder Zerkleinern der Reststoppeln 5 und der auf dem Feld abgelegten abgeschnittenen Maispflanzen 7 ausgebildet. Hierbei werden die Reststoppeln 5 vorzugsweise unmittelbar am Boden abgetrennt und gemeinsam mit den abgeschnittenen Maispflanzen 7 in sehr feine Bestandteile zerkleinert.

Die zerkleinerten Reste der Maispflanze 7 können in einem nachfolgenden Umpflügvorgang vollständig und möglichst tief in den Boden eingebracht werden, wo sie nachfolgend verrotten. Insbesondere werden hierbei die gegebenenfalls in den Reststoppeln 5 vorhandenen Puppen des Maiszünslers zerstört.

Die mechanischen Einrichtungen 20 sind vorzugsweise drehbar am Erntevorsatz 10 angelenkt, Insbesondere ist jede der mechanischen Einrichtungen 20 jeweils einzeln am Erntevorsatz 10 drehbar angelenkt. Die mechanischen Einrichtungen sind jeweils um eine Drehachse D12 drehbar, welche senkrecht zur Fahrtrichtung FR ausgebildet ist.

Die mechanischen Einrichtungen 20 sind jeweils einzeln am Boden geführt, insbesondere tiefengeführt. Hierfür ist ein sogenanntes Tiefenführungsrad 21 vorgesehen.

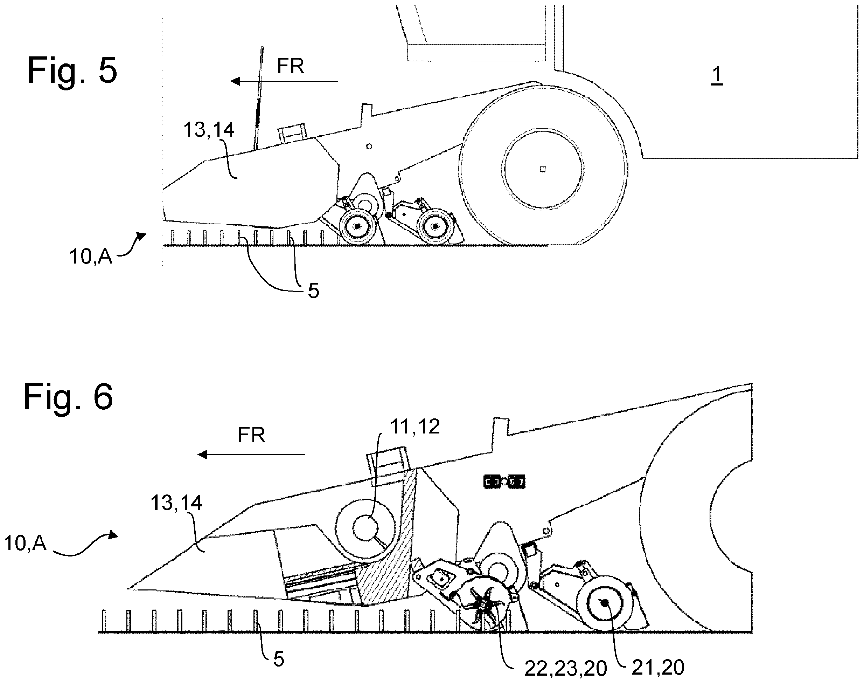

Aufgrund der individuellen Tiefenführung jeder einzelnen mechanischen Einheit 20 insbesondere in Kombination mit der individuellen drehbaren Anlenkung jeder einzelnen mechanischen Einheit 20, befindet sich die mindestens eine Schneid- und/oder Zerkleinerungseinrichtung 22 (siehe Schnittdarstellung eines Erntevorsatzes in seitlicher Darstellung gemäß Fig. 6) der jeweiligen mechanischen Einheit 20 immer in optimaler bodennaher Anordnung, um die Reststoppel 5 und die am Boden liegende abgeschnittene Maispflanze 7 möglichst vollständig zu zerkleinern.

Eine bevorzugte Ausführungsform sieht insbesondere zwei Tiefenführungsräder 21 je mechanischer Einheit 20 vor, zwischen denen jeweils die mindestens eine Schneid- und/oder Zerkleinerungseinrichtung 22 der mechanischen Einheit 22 angeordnet ist.

Das Tiefenführungsrad 21 hat zudem den Vorteil, dass das zusätzliche Gewicht der mechanischen Einheit 20 und des gesamten Erntevorsatzes 10 auf den Tiefenführungsrädern 21 abgestützt wird. Dies verhindert, dass sich die erhöhte Frontlast des Erntevorsatzes 10 negativ auf die Gewichtsverteilung am Mähdrescher 1 auswirkt.

Die mechanischen Einheiten 20 können beispielsweise ein Schlegelmesser 23 und/oder ein Häckselmesser und oder eine andere geeignete Schneid- und/oder Zerkleinerungseinrichtung 22 aufweisen. Beispielsweise handelt es sich um mindestens ein um eine Drehachse gelagertes Schlegelmesser 23. Besonders bevorzugt ist die Verwendung mindestens eines um eine weitgehend horizontale Drehachse gelagertes Schlegelmesser 23 je mechanischer Einheit 20, welches sich in einer vertikalen Schneidebene bewegt.

Die mechanischen Einheiten 20 können jedoch auch beispielsweise mehrere entsprechende Schlegelmesser 23 und/oder Häckselmesser o.ä. aufweisen, um eine optimierte Zerkleinerung der Reststoppeln 5 und der abgeschnittenen Maispflanzen 7 zu erzielen. Beispielsweise kann die Kombination eines in einer weitgehend vertikalen Schneidebene bewegtes Schlegelmessers 23 und eines in einer weitgehend horizontalen Schneidebene bewegtes Schlegelmessers vorgesehen sein.

Gemäß einer Ausführungsform ist vorgesehen, dass die mechanischen Einrichtungen 20 jeweils über einen Hydraulikmotor oder einen Elektromotor oder ein anderes geeigneten Antriebsmittel (nicht dargestellt) angetrieben werden. Vorzugsweise ist hierbei jeder mechanischen Einrichtung 20 ein eigenes Antriebsmittel zugeordnet. Es können jedoch auch für gewisse Anwendungsfälle Ausführungsformen vorteilhaft sein, wobei den mechanischen Einrichtungen 20 jeweils ein gemeinsamer Antrieb, insbesondere jeweils ein gemeinsamer Hydraulikmotor oder einen Elektromotor, zugeordnet ist. Weiterhin sind Ausführungsformen denken, bei denen jeweils ein Teil der mechanischen Einrichtungen 20 einem gemeinsamen Antrieb zugeordnet sind, so dass die Anzahl der Antriebe geringer ist als die Anzahl der mechanischen Einrichtungen 20.

Weiterhin zeigen die Figuren 7 und 8 den Erntevorsatz 10 in einer Transportanordnung B. Insbesondere können hierbei seitliche Bereiche des Erntevorsatzes 10, hochgeklappt und vorzugsweise oberhalb eines mittleren Bereichs des Erntevorsatzes 10 angeordnet werden. Dadurch kann die Breite des Erntevorsatzes 10 für den Straßentransport, beispielsweise für den Transport von einem ersten Feld zu einem zweiten Feld, reduziert werden. Insbesondere weist der Erntevorsatz 10 in der Transportanordnung B eine reduzierte Transportbreite B(B) auf.

Im vorliegenden Beispiel werden jeweils die beiden äußeren ersten Führungseinrichtungen 13 und jeweils zugeordnete zweite Führungseinrichtungen 14 nach oben geklappt, dadurch entspricht die reduzierte Transportbreite B(B) im Wesentlichen der Hälfte der normalen Arbeitsbreite B(A) (vergleiche Fig. 2). Die den nach oben geklappten zweiten Führungseinrichtungen 15 fluchtend nachgeordneten mechanischen Einheiten 20 werden ebenfalls mit nach oben geklappt.

Der gesamte Erntevorsatz 10 kann für den Straßentransport angehoben werden. Gemäß einer Ausführungsform kann vorgesehen sein, dass die Tiefenführungsräder 21 der mittleren mechanischen Einheiten 20, welche in der Transportanordnung B nicht nach oben geklappt angeordnet sind, auch nach dem Anheben des Erntevorsatzes 10 für den Straßentransport weiterhin Bodenkontakt haben und somit das Gewicht des Erntevorsatzes 10 auch im angehobenen Zustand entsprechend abgestützt wird.

Wenn auch im Zusammenhang der voranstehenden Figurenbeschreibung generell von "schematischen" Darstellungen und Ansichten die Rede ist, so ist damit keineswegs gemeint, dass die Figurendarstellungen und deren Beschreibung hinsichtlich der Offenbarung des erfindungsgemäßen Erntevorsatzes 10 von untergeordneter Bedeutung sein sollen. Der Fachmann ist durchaus in der Lage, aus den schematisch und abstrakt gezeichneten Darstellungen genug an Informationen zu entnehmen, die ihm das Verständnis der Erfindung erleichtern, ohne dass er etwa aus den gezeichneten und möglicherweise nicht exakt maßstabsgerechten Größenverhältnissen von Teilen des Erntevorsatzes 10 oder anderer gezeichneter Elemente in irgendeiner Weise in seinem Verständnis beeinträchtigt wäre. Die Figuren ermöglichen es dem Fachmann als Leser somit, anhand der konkreter erläuterten Umsetzungen des erfindungsgemäßen Verfahrens und der konkreter erläuterten Funktionsweise der erfindungsgemäßen Vorrichtung ein besseres Verständnis für den in den Ansprüchen sowie im allgemeinen Teil der Beschreibung allgemeiner und/oder abstrakter formulierten Erfindungsgedanken abzuleiten.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezugszeichenliste

- 1: Mähdrescher
- 2: Maispflückvorsatz
- 3: Führungseinrichtung
- 4: Schneideinrichtung
- 5: Reststoppel
- 7: Maispflanzen
- 8: Maisstängel / Stängel
- 10: Erntevorsatz
- 11: Einzugs- und Fördereinrichtung
- 12: Förderschnecke
- 13: Führungseinrichtung
- 14: erste Führungseinrichtung
- 15: zweite Führungseinrichtung
- 16: Schneideinrichtung
- 17: Horizontalhäcksler
- 18: Schneidmesser
- 20: mechanische Einrichtung
- 21: Tiefenführungsrad
- 22: Schneid- und/oder Zerkleinerungseinrichtung
- 23: Schlegelmesser

- A: Arbeitsanordnung
- B: Transportanordnung
- B(A): Arbeitsbreite
- B(B): reduzierte Transportbreite
- D12: Drehachse Förderschnecke
- D20: Drehachse Mechanische Einrichtung

- FR: Fahrtrichtung

## Patentansprüche

1. Erntevorsatz (10) für in Reihen angebaute Maispflanzen (7), welcher Erntevorsatz (10) insbesondere an einer selbstfahrenden Erntemaschine, insbesondere an einem Mähdrescher (1) oder Häcksler, angebaut oder angeordnet sein kann,
wobei der Erntevorsatz (10) mindestens eine Einzugs- und Fördereinrichtung aufweist, welche die in Reihen angeordnete Maispflanzen (7) erfasst oder erfassen, wobei dem Erntevorsatz (10) eine Mehrzahl von nebeneinander angeordneten Schneideinrichtungen zum Abschneiden von mehreren in Reihen nebeneinander angeordneten Maispflanzen (7) zugeordnet ist, und
wobei der Erntevorsatz (10) Einrichtungen zum Pflücken, Aufnehmen und/oder Bearbeiten der Maiskolben umfasst,
**dadurch gekennzeichnet, dass**
jeder Schneideinrichtung (16) eine in einer Fahrtrichtung (FR) fluchtend nachfolgende mechanische Einrichtung (20) zur Kürzung, zur Entfernung und/oder zum Abschlagen von auf dem Feld verbliebenen Pflanzenstoppeln und/oder von auf dem Feld abgelegten Maispflanzen (7) zugeordnet ist.

2. Erntevorsatz (10) nach Anspruch 1, wobei die mechanischen Einrichtungen (20) jeweils drehbar angelenkt sind.

3. Erntevorsatz (10) nach Anspruch 1 oder 2, wobei die mechanischen Einrichtungen (20) jeweils am Boden geführt sind.

4. Erntevorsatz (10) nach einem der voranstehenden Ansprüche, wobei die mechanischen Einrichtungen (20) jeweils ein einzeln tiefengeführt ausgebildet sind.

5. Erntevorsatz (10) nach einem der voranstehenden Ansprüche, wobei den mechanischen Einrichtungen (20) jeweils ein Rad (21) zu Tiefenführung zugeordnet ist.

6. Erntevorsatz (10) nach einem der voranstehenden Ansprüche, wobei die mechanischen Einrichtungen (20) jeweils mindestens ein Schlegelmesser (23) umfassen.

7. Erntevorsatz (10) nach Anspruch 6, wobei die Schlegelmesser (23) um eine Drehachse drehbar gelagert sind.

8. Erntevorsatz (10) nach Anspruch 7, wobei die Drehachse weitgehend horizontal gelagert angeordnet ist.

9. Erntevorsatz (10) nach einem der voranstehenden Ansprüche, wobei die mechanischen Einrichtungen (20) jeweils über einen Hydraulikmotor oder einen Elektromotor antreibbar sind.

10. Erntevorsatz (10) nach einem der voranstehenden Ansprüche, wobei den mechanischen Einrichtungen (20) jeweils ein eigener Antrieb, insbesondere jeweils ein eigener Hydraulikmotor oder ein Elektromotor, zugeordnet ist.

11. Erntevorsatz (10) nach einem der voranstehenden Ansprüche, wobei den mechanischen Einrichtungen (20) jeweils ein gemeinsamer Antrieb, insbesondere jeweils ein gemeinsamer Hydraulikmotor oder einen Elektromotor, zugeordnet ist.

12. Selbstfahrende landwirtschaftliche Erntemaschine, die mit mindestens einem Erntevorsatz (10) gemäß einem der Ansprüche 1 bis 11 ausgestattet ist.

13. Selbstfahrende landwirtschaftliche Erntemaschine, die durch einen Mähdrescher (1) oder Häcksler gebildet ist.
